# DEMANDE DE BREVET EUROPEEN

(11) **EP 4 071 444 A1**
(43) Date de publication de la demande: **12.10.2022**
(21) Numéro de dépôt: 22163078.3
(22) Date de dépôt: 18.03.2022
(51) Int. Cl.: G01C 23/00, G01C 21/20, G05D 1/00

(54) **SYSTEME D'AFFICHAGE DE DONNEES D'UN AERONEF**

(30) Priorité: 06.04.2021 FR 2103481
(71) Demandeur: Airbus Helicopters, 13725 Marignane Cedex (FR)
(72) Inventeur: LARMINIER, Hervé, 13330 PELISSANNE (FR)
(74) Mandataire: GPI Brevets

(57) **Abrégé**

La présente invention concerne un système d'aide au pilotage (1) d'un véhicule (100), le système d'aide au pilotage (1) comprenant au moins un afficheur (30) et une pluralité de senseurs (10) pour mesurer chacun une valeur d'un même paramètre, ledit au moins un afficheur (30) étant configuré pour afficher un symbole (80) porteur de ladite valeur, ladite pluralité de senseurs (10) comprenant des senseurs redondés avec une redondance d'ordre trois ou plus. Le système d'aide au pilotage (1) comporte un contrôleur d'affichage (70) configuré pour sélectionner selon une logique mémorisée un senseur sélectionné parmi ladite pluralité de senseurs (10), le ou les afficheurs (30) utilisant la valeur dudit paramètre mesurée avec ledit senseur sélectionné pour afficher ledit symbole (80).

## Description

La présente invention concerne un système d'affichage de données d'un aéronef.

Un aéronef comporte un système d'affichage pour afficher des informations afin d'aider un pilote. Un tel système est parfois connu sous l'acronyme «ICDS» et l'expression anglaise « Integrated Cockpit Display System ».

Le système d'affichage peut être configuré pour afficher des informations utiles pour un pilote. Le terme « information » peut désigner des symboles qui incluent des formes géométriques, des chiffres, des lettres, ces symboles pouvant varier dans le temps et pouvant représenter des grandeurs physiques notamment.

Parmi ces informations, l'homme du métier distingue des informations dites « primaires » et des informations dites « secondaires ».

Les informations primaires sont relatives à des informations de pilotage à court terme, voire à des informations essentielles de pilotage. Les informations de pilotage à court terme peuvent comprendre notamment au moins un angle d'assiette de l'aéronef, un cap suivi, une vitesse air de l'aéronef, une vitesse ascensionnelle par exemple mesurée avec un variomètre, une altitude barométrique de l'aéronef, une hauteur de l'aéronef par exemple mesurée avec une radiosonde, un facteur de charge de l'aéronef, des données de navigation, une information de première limitation d'une source motrice de l'aéronef, voire des alarmes éventuelles. Par exemple, un afficheur d'informations primaires à court terme peut afficher un symbole de vecteur vitesse, une échelle d'assiette, une échelle d'altitude, une échelle de vitesse et une échelle de roulis, un cap et diverses alarmes. Les informations de pilotage essentielles comprennent les informations de pilotage à court terme et des informations complémentaires jugées essentielles pour le pilotage d'un aéronef donné, telles que par exemple une vitesse de rotation d'une voilure tournante sur un giravion, une quantité de carburant restant dans l'aéronef et des messages d'alerte.

Les informations secondaires regroupent toutes les autres informations affichables et par exemple des données météorologiques, des données d'établissement d'une route à suivre, des données relatives à des pressions et/ou des températures d'huile, des pressions et/ou des températures de gaz, des indications relatives à une source d'énergie électrique telles qu'un voltage, des pressions de carburant, des pressions de pneus, des données relatives à la sortie d'un train d'atterrissage, des images provenant d'une caméra de surveillance, des données relatives à un treuil embarqué...

Pour présenter ces diverses informations à un pilote, un aéronef peut comprendre divers afficheurs. Dans ce contexte, un aéronef peut comprendre un ou plusieurs afficheurs, de type « écran » et éventuellement de type « écran multifonction », disposés sur une planche de bord et/ou un pupitre d'un poste de pilotage.

Par exemple, un aéronef « monopilote » peut comporter deux écrans multifonctions visibles par le pilote. Selon un autre exemple, un aéronef « bipilote » peut comporter deux écrans multifonctions disposés en face du pilote et deux écrans multifonctions sont disposés en face du copilote. Selon un autre exemple, sur un aéronef « bipilote » un écran multifonction est disposé en face du pilote et un écran multifonction est disposé en face du copilote, au moins un troisième écran multifonction étant agencé latéralement entre le pilote et le copilote.

Un écran multifonction peut afficher diverses pages pouvant contenir diverses informations. Ainsi, un écran multifonction peut afficher une page contenant des informations primaires et une ou plusieurs pages contenant des informations secondaires. Un pilote peut choisir la page à afficher.

Par ailleurs, le système d'affichage comporte divers senseurs pour mesurer les valeurs de certaines informations à afficher. Des senseurs importants peuvent être redondés par sécurité.

Selon un état de la technique, un aéronef bipilote peut comporter un premier et un deuxième jeux principaux de senseurs ainsi qu'un jeu de senseurs de secours mesurant chacun des informations relatives à au moins une vitesse et des angles d'assiette. Le système d'affichage comporte un équipement de secours affichant les informations mesurées par le jeu de senseurs de secours. De plus, le système d'affichage comporte un écran pilote agencé en vis-à-vis du pilote, un écran copilote agencé en vis-à-vis du copilote et un sélecteur à trois positions. Le pilote ou le copilote peut manœuvrer le sélecteur pour afficher soit les informations mesurées avec le premier jeu principal de senseurs sur les écrans pilote et copilote soit les informations mesurées avec le deuxième jeu principal de senseurs sur les écrans pilote et copilote, soit les informations mesurées avec le premier jeu principal de senseurs sur l'écran pilote et les informations mesurées avec le deuxième jeu principal de senseurs sur l'écran copilote. Le pilote ou le copilote peut choisir le jeu principal de senseurs valide en fonction des informations affichées sur l'écran de secours.

Cet état de la technique propose ainsi un sélecteur manuel manœuvré par un pilote ou un copilote pour choisir manuellement le jeu de senseurs fournissant des informations aux écrans. La charge de travail du pilote s'en trouve impactée.

Le document US 10850864 décrit un système d'affichage qui comporte un premier système de mesure et un deuxième système de mesure ainsi qu'un comparateur. Le comparateur peut déterminer si les données mesurées par les systèmes de mesure sont corrompues, par comparaison à des données idéales contenues dans une base de données. Selon une réalisation, le comparateur est agencé en amont de systèmes critiques, le comparateur pouvant alors altérer les données corrompues. Selon une réalisation, le comparateur est agencé en parallèle de systèmes critiques, le comparateur pouvant alors faire fonctionner les systèmes critiques dans un mode dégradé.

Les documents suivants sont en outre connus et décrivent des méthodes pour analyser des mesures: FR 3 013 834 A1, : FR 3 000 196 A1 et KASSAB M A ET AL : « A novel voting algorithm for redundant aircraft sensors », PROCEEDING OF THE TH WORLD CONGRESS ON INTELLIGENT CONTROL AND AUTOMATION, IEEE, 29 juin 2014 (2014-06-29), pages 3741-3746 XP032743106, DOI: 10.1109/WCICA.2014.7053339.

La présente invention a alors pour objet de proposer un système visant à permettre l'affichage de données intègres, à savoir justes et donc non erronées, sans intervention d'un pilote.

L'invention concerne un système d'aide au pilotage d'un véhicule tel que revendiqué, le système d'aide au pilotage comprenant au moins un afficheur, en particulier plusieurs afficheurs, et au moins un jeu de senseurs ayant une pluralité de senseurs mesurant chacun une valeur d'un même paramètre, chaque afficheur dudit au moins un afficheur étant configuré pour afficher un symbole porteur de ladite valeur, ladite pluralité de senseurs comprenant des senseurs redondés avec une redondance d'ordre trois ou plus.

Le système d'aide au pilotage comporte un contrôleur d'affichage configuré, par exemple au moins dans un mode de fonctionnement automatique, pour sélectionner selon une logique mémorisée un senseur sélectionné parmi ladite pluralité de senseurs, chaque afficheur dudit au moins un afficheur utilisant la valeur dudit paramètre mesurée avec ledit senseur sélectionné pour l'affichage dudit symbole.

L'expression « chaque afficheur dudit au moins un afficheur » fait référence à tous les afficheurs du système, indépendamment du nombre d'afficheurs et par exemple en présence d'un afficheur ou plus.

L'expression « au moins dans un mode de fonctionnement automatique » signifie que le système d'aide au pilotage peut appliquer le procédé de l'invention pour choisir automatiquement le senseur sélectionné soit tout le temps en présence d'un unique mode de fonctionnement soit au moins durant un mode de fonctionnement dit « mode fonctionnement automatique » en présence de plusieurs mode de fonctionnement.

En présence de plusieurs modes de fonctionnement, le mode de fonctionnement automatique de l'invention peut être un mode par défaut. En présence de plusieurs modes de fonctionnement, le système peut comprendre une interface permettant à un pilote de choisir le senseur sélectionné. L'interface transmet, par exemple, un signal au contrôleur d'affichage, ce signal étant porteur du choix réalisé. Le contrôleur d'affichage est alors aussi configuré pour sélectionner un senseur particulier en fonction du signal reçu.

La description fait référence au mode de fonctionnement automatique.

Pour au moins un paramètre, le système d'aide au pilotage comporte alors un jeu de senseurs apte à mesurer une valeur ce paramètre. L'invention peut s'appliquer pour plusieurs paramètres en faisant appel à des jeux de senseurs respectifs. Par exemple, le système d'aide au pilotage peut comprendre un jeu de senseurs mesurant des valeurs d'un angle d'assiette, un jeu de senseurs mesurant des valeurs d'un angle de cap, un jeu de senseurs mesurant des valeurs d'une vitesse et/ou un jeu de senseurs mesurant des valeurs d'une hauteur. Un même senseur peut appartenir à plusieurs jeux de senseurs. Par exemple, une centrale inertielle peut être utilisée pour mesurer divers angles et des vitesses.

A tout moment et au moins dans le mode de fonctionnement automatique, le contrôleur d'affichage analyse les signaux émis par les senseurs d'un ou des jeux de senseurs. Le contrôleur d'affichage est alors configuré pour sélectionner un senseur dit « senseur sélectionné » parmi chaque jeu de senseurs. Le ou les afficheurs peuvent alors afficher un symbole variant en fonction de la valeur mesurée par ce senseur sélectionné. Un tel symbole peut prendre la forme d'un chiffre, d'un index mobile par rapport à une échelle fixe, d'une échelle mobile par rapport à un index fixe, un fond ayant un aspect variant en fonction de la valeur concernée...

Ainsi, ce système est un système automatique choisissant à tout moment et au moins dans le mode de fonctionnement automatique, un senseur jugé intègre pour mesurer la valeur d'un paramètre. Le système permet alors de reconfigurer automatiquement le ou les senseurs sélectionnés à utiliser par le ou les afficheurs.

L'expression « un afficheur étant configuré pour afficher un symbole porteur de ladite valeur » signifie que l'afficheur concerné peut afficher, automatiquement ou sur requête, un symbole représentant la valeur mesurée par le senseur sélectionné correspondant.

Il en résulte que la charge de travail d'un pilote est optimisée au moins dans le mode de fonctionnement automatique. Le pilote n'a en effet pas besoin de comparer diverses sources pour évaluer la valeur du paramètre étudié. Le ou les afficheurs fonctionnent toujours selon un mode optimal, et non pas un mode dégradé. En outre, le contrôleur d'affichage n'influence pas la valeur du paramètre affiché et ne risque donc pas de l'altérer. Le contrôleur d'affichage choisit un senseur particulier selon une logique prédéterminée permettant d'identifier un senseur intègre pour chaque paramètre. Par exemple, le contrôleur d'affichage transmet à le ou aux afficheurs un signal porteur de la valeur mesurée par le senseur sélectionné. Par exemple, le signal peut être un signal numérique porteur de la valeur en question ou un signal analogique ayant une forme variant en fonction de ladite valeur. En présence de plusieurs afficheurs, l'invention permet ainsi d'harmoniser les sources primaires, à savoir les senseurs, utilisés par les afficheurs.

Le système d'aide au pilotage peut notamment comporter une ou plusieurs des caractéristiques qui suivent, prises seules ou en combinaison.

Selon une première variante, ledit contrôleur d'affichage est configuré pour choisir ledit senseur sélectionné en appliquant un algorithme de la médiane.

La littérature explicite un tel algorithme de la médiane.

Le senseur sélectionné est alors le senseur fournissant une valeur médiane au regard de toutes les valeurs déterminées par tous les senseurs d'un jeu de senseurs.

Selon une deuxième variante, le contrôleur d'affichage peut être configuré pour réaliser une moyenne des valeurs mesurées par les senseurs de ladite pluralité de senseurs d'un jeu de senseurs, ledit contrôleur d'affichage sélectionnant ledit senseur sélectionné en fonction de ladite moyenne.

Le contrôleur d'affichage peut mettre en œuvre un algorithme usuel afin de déterminer la moyenne des valeurs mesurées par les senseurs d'un même jeu de senseurs. En fonction de cette moyenne, le contrôleur d'affichage choisit le senseur sectionné pour ce jeu de senseurs.

Par exemple, le senseur sélectionné peut être le senseur d'un jeu de senseurs mesurant une valeur la plus proche de la moyenne.

Selon un autre exemple, le contrôleur d'affichage peut choisir le senseur sélectionné parmi une liste de senseurs classés selon un ordre particulier, le senseur sélectionné étant le premier senseur de la liste présentant une différence avec la moyenne inférieure à un seuil prédéterminé.

Selon une troisième variante alternative ou complémentaire, ladite pluralité de senseurs peut comporter un nombre de groupes supérieur à un, chaque groupe comprenant au moins un desdits senseurs, lesdits groupes étant classés selon un ordre de classement allant d'un groupe le plus haut classé jusqu'à un groupe le plus mal classé, ledit contrôleur d'affichage sélectionnant un senseur du premier groupe jugé intègre en partant du groupe le plus haut classé selon ledit ordre de classement.

Le système peut appliquer par exemple la première variante pour un jeu de senseurs relatif à un premier paramètre et/ou la deuxième variante ou la troisième variante pour un deuxième jeu de senseurs relatif à un deuxième paramètre.

Selon la troisième variante, les senseurs d'un jeu de senseurs sont chacun affectés à un groupe, et les groupes d'un jeu de senseurs sont classés. Si le groupe le plus haut classé est jugé intègre par le contrôleur, le senseur sélectionné est un senseur prédéterminé de ce groupe. Dans la négative, le contrôleur analyse le groupe suivant et ainsi de suite tant qu'un senseur n'est pas sélectionné, jusqu'au groupe le plus mal classé.

Ladite pluralité de senseurs d'un jeu de senseurs peut par exemple comporter au moins trois groupes.

Chaque groupe distinct du groupe le plus mal classé peut comporter au moins deux senseurs. Le groupe le plus mal classé peut aussi comporter au moins deux senseurs. Au moins les groupes classés au dessus du groupe le plus mal classé peuvent comprendre des senseurs redondés avec une redondance au moins de deux.

Selon une possibilité, le contrôleur d'affichage peut être configuré pour considérer qu'un groupe est intègre lorsque les au moins deux senseurs de ce groupe déterminent des valeurs égales entre elles à une marge prédéterminée près pour ledit paramètre.

Si les senseurs d'un groupe mesurent des valeurs sensiblement équivalentes pour un paramètre, ce groupe est considéré comme étant intègre par le contrôleur.

Selon une possibilité, au moins deux desdits groupes comportent des senseurs dissimilaires.

Le terme « dissimilaire » signifie que les senseurs fonctionnent selon des technologies différentes ou des fournisseurs différents. Par exemple, une hauteur peut être mesurée à l'aide d'une radiosonde ou d'un système barométrique, ou alors à l'aide de radiosondes fournies par des fournisseurs différents .

Par exemple, un jeu de senseurs mesurant des valeurs d'un même paramètre peut avoir une redondance d'ordre 5 et peut être dissimilaire d'ordre 3. Par exemple, ce jeu de senseurs comprend alors un groupe le plus haut classé ayant deux senseurs similaires, un groupe intermédiaire ayant deux senseurs similaires et un groupe le plus mal classé de secours ayant un senseur, les senseurs du groupe le plus haut classé étant dissimilaires des senseurs du groupe intermédiaire et des senseurs du groupe le plus mal classé, les senseur du groupe intermédiaire et les senseurs du groupe le plus mal classé étant aussi dissimilaires.

Selon une possibilité, ledit ordre de classement peut être un ordre établi en fonction d'un niveau de précision des senseurs.

Le terme « précision » fait référence à l'exactitude de la mesure réalisée.

Dès lors, le groupe le plus haut classé possède un ou des senseurs plus précis que n'importe quel autre senseur d'un autre groupe, ledit groupe le plus mal classé ayant un ou des senseurs moins précis que n'importe quel autre senseur d'un autre groupe.

Par exemple, un jeu de senseurs mesurant des valeurs d'un même paramètre peut avoir un groupe ayant au moins un senseur très précis, un groupe ayant au moins un senseur précis, et un groupe ayant au moins un senseur peu précis.

Quelle que soit la variante et selon une possibilité compatible avec les précédentes, le contrôleur d'affichage peut comporter au moins deux calculateurs, chaque calculateur comportant au moins deux voies ou canaux de traitement configurés chacun pour mettre en œuvre ladite logique mémorisée selon un ordre prédéfini.

Le contrôleur d'affichage peut comprendre deux calculateurs duals par sécurité.

Quelle que soit la variante et selon une possibilité compatible avec les précédentes, ledit système d'aide au pilotage peut comporter un système de pilotage automatique, le système de pilotage automatique comportant au moins un actionneur agissant sur un organe de pilotage, le système de pilotage automatique comprenant un contrôleur de pilotage communiquant avec le contrôleur d'affichage, le contrôleur de pilotage étant configuré pour piloter ledit au moins un actionneur en fonction de ladite valeur mesurée par ledit senseur sélectionné.

Dès lors, le ou les afficheurs affichent pour un paramètre une valeur homogène à la valeur utilisée par le système de pilotage automatique. Le pilote peut alors visualiser la valeur du paramètre prise en compte par le système de pilotage automatique.

Selon un autre aspect, un véhicule peut comporter un système d'aide au pilotage selon l'invention.

Cette invention vise aussi un procédé mis en œuvre par un tel système. Ainsi, l'invention vise un procédé pour déterminer, au moins dans un mode de fonctionnement automatique, une valeur intègre d'un paramètre avec un système d'aide au pilotage, le système d'aide au pilotage comprenant au moins un afficheur et au moins un jeu de senseurs ayant une pluralité de senseurs pour mesurer chacun une valeur d'un même paramètre, chaque afficheur dudit au moins un afficheur étant configuré pour afficher un symbole porteur de ladite valeur, ladite pluralité de senseurs comprenant des senseurs redondés avec une redondance d'ordre trois ou plus.

Le procédé comporte la sélection avec un contrôleur d'affichage selon une logique mémorisée d'un senseur sélectionné parmi ladite pluralité de senseurs, chaque afficheur dudit au moins un afficheur utilisant la valeur dudit paramètre mesuré avec ledit senseur sélectionné pour afficher ledit symbole.

Le procédé peut comporter notamment une ou plusieurs des caractéristiques qui suivent, prises seules ou en combinaison.

Selon une possibilité, le procédé peut comporter un calcul avec le contrôleur d'affichage d'une moyenne des valeurs mesurées par les senseurs de ladite pluralité de senseurs, ledit contrôleur d'affichage sélectionnant ledit jeu sélectionné en fonction de ladite moyenne.

Par exemple, le senseur sélectionné est le senseur mesurant la valeur la plus proche de la moyenne.

Selon une possibilité compatible avec les précédentes, ledit senseur sélectionné peut être le senseur de ladite pluralité de senseurs mesurant une valeur la plus proche de ladite moyenne.

Selon une possibilité, le procédé comporte la détermination avec le contrôleur d'affichage du senseur sélectionné par application d'un algorithme de la médiane.

Selon une possibilité compatible avec les précédentes, ladite pluralité de senseurs pouvant comporter un nombre de groupes supérieur à un, chaque groupe comprenant au moins un desdits senseurs, lesdits groupes étant classés selon un ordre de classement allant d'un groupe le plus haut classé jusqu'à un groupe le plus mal classé, ledit procédé comprenant la sélection avec le contrôleur d'un senseur du premier groupe jugé intègre en partant du groupe le plus haut classé selon ledit ordre de classement.

Selon une possibilité compatible avec les précédentes, le procédé peut comporter le classement d'un groupe en tant que groupe intègre lorsqu'au moins deux senseurs de ce groupe déterminent des valeurs égales entre elles à une marge prédéterminée près pour ledit paramètre.

Selon une possibilité compatible avec les précédentes, ledit système d'aide au pilotage peut comporter un système de pilotage automatique, le système de pilotage automatique comportant au moins un actionneur agissant sur un organe de pilotage, le système de pilotage automatique comprenant un contrôleur de pilotage communiquant avec le contrôleur d'affichage, le procédé comportant le pilotage avec le contrôleur de pilotage dudit au moins un actionneur en fonction de ladite valeur mesurée par ledit senseur sélectionné.

L'invention et ses avantages apparaîtront avec plus de détails dans le cadre de la description qui suit avec des exemples donnés à titre illustratif en référence aux figures annexées qui représentent :
la figure 1, une vue illustrant un système d'aide au pilotage selon l'invention pour un véhicule, et
la figure 2, un schéma illustrant le procédé mis en œuvre par un tel système.

Les éléments présents dans plusieurs figures distinctes sont affectés d'une seule et même référence.

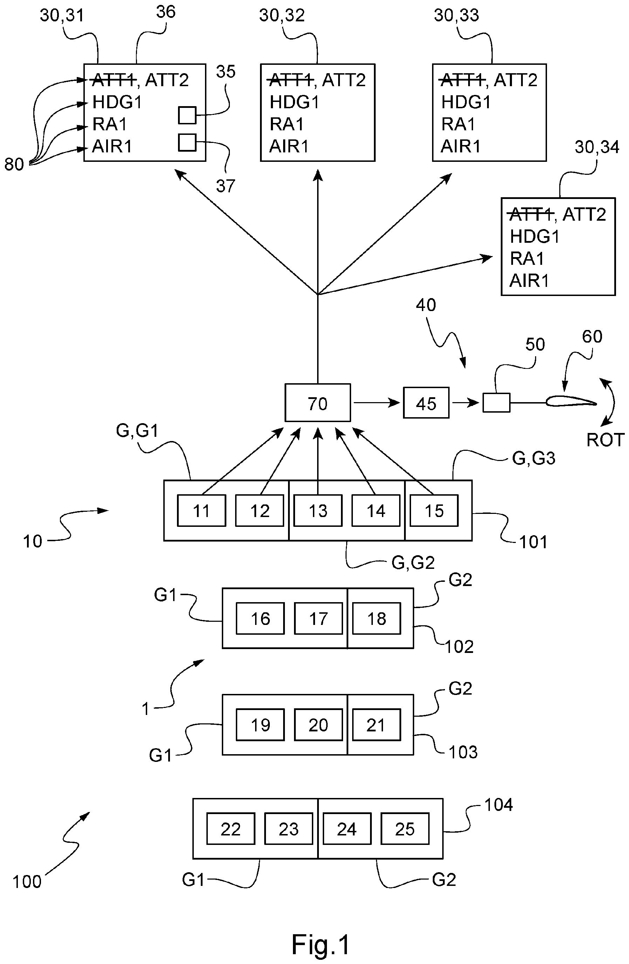

La figure 1 présente un système d'aide au pilotage 1 agencé au sein d'un véhicule 100. Par exemple, ce véhicule 100 est un véhicule terrestre, maritime, ou encore un aéronef. Par exemple, le véhicule 100 comporte une voilure tournante munie d'organes de pilotage 60 tels que des pales.

Indépendamment de la nature du véhicule 100, le système d'aide au pilotage 1 comprend au moins un afficheur 30. La référence 30 désigne n'importe quel afficheur, les références 31 à 34 désignant des afficheurs particuliers. L'expression « chaque afficheur » peut être utilisée aussi bien en présence d'un unique afficheur que de plusieurs afficheurs.

Selon l'exemple illustré, le système d'aide au pilotage 1 peut comprendre au moins un afficheur pilote 31 agencé en face d'un pilote, et/ou au moins un afficheur copilote 33 agencé en face d'un copilote, et éventuellement un ou plusieurs afficheurs centraux 32, 34 agencés entre le pilote et le copilote selon une direction transversale.

Le ou les afficheurs 30 peuvent comprendre un écran 36, voire une unité de contrôle 37 pilotant l'écran 36 en fonction de signaux d'entrée et/ou de signaux émis par une ou plusieurs interfaces homme-machine 35 de l'afficheur 30. Le ou les afficheurs 30 peuvent communiquer entre eux. L'unité de contrôle 37 d'un afficheur 30 peut comprendre un calculateur de traitement. L'unité de contrôle 37 d'un afficheur peut former un unique équipement avec l'écran 36 ou peut être déportée par rapport à l'écran 36.

Le terme « calculateur » désigne un objet pouvant avoir au moins un processeur et au moins une mémoire, au moins un circuit intégré, au moins un système programmable, au moins un circuit logique, ces exemples ne limitant pas la portée donnée à l'expression « calculateur ». Le terme processeur peut désigner aussi bien une unité centrale de traitement connue sous l'acronyme CPU, une unité graphique de traitement GPU, une unité digitale connue sous l'acronyme DSP, un microcontrôleur...

Le terme « signal » désigne un signal porteur d'au moins une donnée, le signal pouvant être analogique ou numérique, optique ou électrique par exemple.

Indépendamment de la nature du véhicule 100 et du nombre d'afficheurs 30, le système d'aide au pilotage 1 comprend une pluralité de senseurs 10. La référence 10 désigne n'importe quel senseur, les références 11 à 25 désignant des senseurs particuliers.

Le terme « senseur » désigne un dispositif comprenant au moins un capteur voire une unité de traitement, tel qu'un calculateur de mesure, ce dispositif émettant au moins un signal porteur, directement ou indirectement, de la valeur d'au moins un paramètre.

En particulier, le système d'aide au pilotage 1 comprend plusieurs senseurs 10 mesurant chacun une valeur d'un même paramètre et formant un jeu 101, 102, 103, 104 de senseurs 10. Le système d'aide au pilotage 1 comprend au moins un jeu de senseurs. Selon l'exemple illustré, quatre jeux 101, 102, 103, 104 de senseurs 10 peuvent mesurer respectivement quatre paramètres différents.

Le nombre de senseurs 10 par jeu 101, 102, 103, 104 de senseurs est donné à titre illustratif sur la figure 1. En particulier, chaque jeu 101, 102, 103, 104 de senseurs peut comprendre des senseurs 10 avec une redondance au moins d'ordre trois, et donc peut comprendre au moins trois senseurs 10 mesurant notamment un même paramètre. Par exemple, un jeu de senseurs peut présenter une redondance d'ordre 3, 4, ou 5, et une dissimilarité d'ordre 2 ou 3. Selon un exemple, un jeu de senseurs peut présenter une redondance d'ordre 3, ou 4 et une dissimilarité d'ordre 2. Selon un autre exemple, un jeu de senseurs peut présenter une redondance d'ordre 5, et une dissimilarité d'ordre 3.

Par exemple, le système d'aide au pilotage 1 peut comprendre un jeu 101 de senseurs 11, 12, 13, 14, 15 mesurant des valeurs d'au moins un angle d'assiette, un jeu 102 de senseurs 16, 17, 18 mesurant des valeurs d'un angle de cap, un jeu 103 de senseurs 19, 20, 21 mesurant des valeurs d'une vitesse et/ou un jeu 104 de senseurs 22, 23, 24, 25 mesurant des valeurs d'une hauteur. Un même senseur peut appartenir à plusieurs jeux de senseurs.

Par exemple, le jeu 101 de senseurs peut comprendre au moins un senseur 10, et deux senseurs 11, 12 selon la figure 1, connus sous l'acronyme «AHRS» et l'expression anglaise « Attitude and Heading Reference System », au moins une centrale inertielle et deux centrales inertielles 13, 14 selon la figure 1 et un inclinomètre 15. Un tel jeu 101 de senseurs présente alors une redondance d'ordre 5 en ayant cinq senseurs et s'avère dissimilaire d'ordre 3 en ayant des senseurs fonctionnant selon trois technologies différentes.

Par exemple, le jeu 102 de senseurs peut comprendre au moins un compas magnétique 16, au moins un compas gyroscopique 17, au moins une boussole 18...

Par exemple, le jeu 103 de senseurs peut comprendre au moins trois systèmes de vitesse air 19, 20, 21...

Par exemple, le jeu 104 de senseurs peut comprendre au moins quatre radiosondes 22, 23, 24, 25...

Indépendamment du nombre de senseurs 10, les senseurs 10 d'un même jeu de senseurs peuvent être répartis en groupe. Ainsi, un jeu de senseurs peut être décomposé en au moins deux groupes G, chaque groupe G comprenant au moins un senseur 10.

En outre, les groupes G d'un jeu de senseurs peuvent être classés selon un ordre de classement allant d'un groupe le plus haut classé jusqu'à un groupe le plus mal classé. Selon l'exemple de la figure 1, le groupe le plus haut classé G1 du jeu de senseurs 101 comporte deux senseurs 11, 12, un groupe médian G2 comporte deux senseurs 13, 14 et le groupe le plus mal classé G3 comporte un senseur 15.

L'ordre de classement peut être un ordre établi en fonction d'un niveau de précision des senseurs 10. Dès lors et en référence par exemple au jeu 101 de senseurs de la figure 1, les senseurs 11, 12 du groupe le groupe le plus haut classé G1 sont plus précis que les senseurs 13, 14 du groupe intermédiaire, les senseurs 13, 14 du groupe intermédiaire étant eux-mêmes plus précis que le senseur 15 du groupe le plus mal classé G3.

Selon une possibilité, chaque groupe G distinct du groupe le plus mal classé G3 comporte alors au moins deux senseurs 10. Le groupe le plus mal classé G3 peut comporter au moins un senseur 10.

En outre, au moins deux groupes G peuvent comporter des senseurs 10 dissimilaires.

Selon un autre aspect, le système d'aide au pilotage 1 comporte un contrôleur d'affichage 70.

Le contrôleur d'affichage 70 peut comprendre par exemple un ou plusieurs calculateurs d'affichage, voire même un calculateur d'un afficheur 30 ou autres. Par exemple, le contrôleur d'affichage 70 peut comprendre deux calculateurs d'affichage bicanaux/à deux voies, au moins une voie/canal appliquant à chaque instant le procédé de l'invention. Par exemple, une première voie d'un premier calculateur est utilisée tant qu'elle fonctionne correctement. Si la première voie du premier calculateur est en panne, une première voie du deuxième calculateur applique le procédé. Si la première voie du deuxième calculateur est en panne, une deuxième voie du deuxième calculateur applique le procédé. Enfin, si la deuxième voie du deuxième calculateur tombe à son tour en panne, une deuxième voie du premier calculateur applique le procédé.

Le contrôleur d'affichage 70 peut être relié directement ou indirectement, par des liaisons filaires ou non filaires, à chaque senseur 10 et à chaque afficheur 30. De même, chaque afficheur 30 peut être relié directement ou indirectement, par des liaisons filaires ou non filaires, à chaque senseur 10.

Le système d'aide au pilotage 1 peut comporter un système de pilotage automatique 40. Le système de pilotage automatique 40 comporte au moins un actionneur 50 agissant sur un organe de pilotage 60. L'expression « organe de pilotage » désigne un organe permettant de diriger le véhicule.

A titre illustratif, l'organe de pilotage 60 peut être une pale d'une voilure tournante. Un mouvement de l'actionneur 50 induit alors une rotation ROT de la pale autour de son axe de pas. Par exemple, l'actionneur 50 est relié par une timonerie à une servocommande en prise sur un ensemble de plateaux cycliques, chaque pale étant reliée par une bielle de pas à cet ensemble de plateaux cycliques.

Selon un autre exemple, l'organe de pilotage 60 peut être une pale d'un autre rotor voire d'une hélice, un volet, une roue...

Le système de pilotage automatique 40 comprend en outre un contrôleur de pilotage 45 communiquant avec le contrôleur d'affichage 70, par une liaison filaire ou non filaire. Le contrôleur de pilotage 45 peut comprendre au moins un calculateur de pilotage, par exemple commun avec le contrôleur d'affichage 70.

Indépendamment de la constitution du système d'aide au pilotage 1, le contrôleur d'affichage 70 est notamment configuré pour appliquer le procédé de l'invention au moins durant un mode de fonctionnement automatique, en sélectionnant selon une logique mémorisée un senseur 10 sélectionné parmi les senseurs 10 d'un jeu de senseurs, le ou les afficheurs 30 utilisant la valeur du paramètre mesurée avec le senseur 10 sélectionné pour afficher un symbole 80.

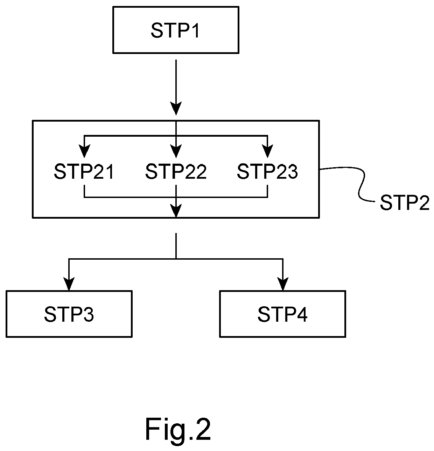

La figure 2 illustre un tel procédé.

Durant une étape préliminaire STP1, chaque senseur 10 émet un signal de mesure porteur de la valeur du paramètre qu'il mesure. Le contrôleur d'affichage 70 reçoit les divers signaux de mesure.

Pour chaque paramètre, le procédé comporte la sélection STP2 avec le contrôleur d'affichage 70, selon une logique mémorisée dans ce contrôleur d'affichage 70, d'un senseur 10 dit « senseur sélectionné » parmi la pluralité de senseurs 10 mesurant ce paramètre.

Selon une variante, le procédé comporte à cet effet un calcul STP21 avec le contrôleur d'affichage 70 d'une moyenne des valeurs mesurées par les senseurs 10 d'un même jeu de senseurs 10. Le contrôleur d'affichage 70 sélectionne alors un senseur 10 sélectionné parmi le jeu de senseurs en fonction de cette moyenne par exemple en prenant le senseur mesurant une valeur la plus proche de la moyenne.

Selon une variante, le procédé comporte la détermination STP22, avec le contrôleur d'affichage 70, du senseur 10 sélectionné par application d'un algorithme de la médiane aux valeurs mesurées par chaque senseur 10 du jeu de senseurs concerné.

Selon une variante applicable avec un jeu de senseurs partagé en plusieurs groupes, le procédé comprend la sélection STP23, avec le contrôleur d'affichage 70, d'un senseur 10 du premier groupe jugé intègre en partant du groupe le plus haut classé G1 selon l'ordre de classement. Le groupe le plus mal classé est par exemple toujours jugé intègre.

En présence de plusieurs senseurs 10, un groupe G est considéré intègre, par le calculateur d'affichage 70, lorsque les senseurs 10 de ce groupe G déterminent des valeurs égales entre elles à une marge prédéterminée près pour ledit paramètre. A cet effet, le calculateur d'affichage 70 peut comparer les mesures effectuées par les senseurs du groupe. Par exemple, pour un groupe G à plusieurs senseurs 10, si la valeur mesurée par un des senseurs 10 est égale à la valeur mesurée par chaque autre senseur 10 plus ou moins ladite marge alors le groupe est intègre.

En présence d'un unique senseur 10, un groupe G est considéré intègre, par le calculateur d'affichage 70, par exemple lorsque le senseur 10 de ce groupe détermine une valeur égale à une moyenne des valeurs des autres groupes à une marge prédéterminée près.

Indépendamment de la manière de déterminer le senseur 10 sélectionné, le procédé comporte l'utilisation par chaque afficheur 30 de la valeur du paramètre mesuré avec uniquement le senseur 10 sélectionné du jeu de senseurs concerné. Un ou plusieurs afficheurs 30 peuvent alors afficher durant une étape STP3 un symbole 80 représentant cette valeur...

Par exemple, le contrôleur d'affichage 70 transmet à au moins un voire à chaque afficheur 30 la valeur du paramètre mesuré avec le senseur sélectionné ou indique à au moins un voire à chaque afficheur quel est le senseur 10 sélectionné à considérer ou ferme un interrupteur reliant le senseur sélectionné et l'afficheur.

En présence d'un système de pilotage automatique 40, ce système de pilotage automatique 40 peut utiliser la valeur du paramètre mesuré avec le senseur 10 sélectionné pour piloter le véhicule 100 durant une étape STP4 de pilotage automatique.

En référence à la figure 1, chaque afficheur 30 peut par exemple afficher un symbole ATT1 correspondant à la valeur d'un angle d'assiette mesuré avec un senseur sélectionné 11 du jeu de senseurs 101, et/ou un symbole HDG1 correspondant à la valeur d'un cap mesuré avec un senseur sélectionné 16 du jeu de senseurs 102, et/ou un symbole AIR1 correspondant à la valeur d'une vitesse mesurée avec un senseur sélectionné 19 du jeu de senseurs 103, et/ou un symbole RA1 correspondant à la valeur d'une hauteur mesurée avec un senseur sélectionné 22 du jeu de senseurs 104.

Si le contrôleur d'affichage 70 détermine que le senseur 11 de jeu de senseurs 101 n'est plus intègre, le contrôleur d'affichage 70 détermine que le senseur 13, par exemple, devient le nouveau senseur sélectionné pour le jeu de senseurs 101. Dès lors, chaque afficheur 30 pourra afficher un symbole ATT2 correspondant à la valeur d'un angle d'attitude mesuré avec le senseur sélectionné 13 de jeu de senseurs 101. Ce changement est illustré par une rature sur la figure 1.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention et des revendications.

## Revendications

1. Système d'aide au pilotage (1) d'un véhicule (100), le système d'aide au pilotage (1) comprenant plusieurs afficheurs (30) et au moins un jeu de senseurs comprenant une pluralité de senseurs (10) mesurant chacun une valeur d'un même paramètre, chaque afficheur (30) étant configuré pour afficher un symbole (80) porteur de ladite valeur, ladite pluralité de senseurs (10) comprenant des senseurs redondés avec une redondance d'ordre trois ou plus,
**caractérisé en ce que** ledit système d'aide au pilotage (1) comporte un contrôleur d'affichage (70) configuré pour sélectionner, au moins dans un mode de fonctionnement automatique, selon une logique mémorisée un senseur sélectionné parmi ladite pluralité de senseurs (10), chaque afficheur (30) utilisant la valeur dudit paramètre mesurée avec ledit senseur sélectionné pour l'affichage dudit symbole (80).

2. Système d'aide au pilotage selon la revendication 1,
**caractérisé en ce que** ledit contrôleur d'affichage (70) est configuré pour choisir ledit senseur sélectionné en appliquant un algorithme de la médiane.

3. Système d'aide au pilotage selon la revendication 1,
**caractérisé en ce que** ledit contrôleur d'affichage (70) est configuré pour réaliser une moyenne des valeurs mesurées par les senseurs de ladite pluralité de senseurs (10), ledit senseur sélectionné étant le senseur de ladite pluralité de senseurs (10) mesurant une valeur la plus proche de ladite moyenne.

4. Système d'aide au pilotage selon la revendication 1, **caractérisé en ce que** ladite pluralité de senseurs (10) comporte un nombre de groupes (G) supérieur à un, chaque groupe (G) comprenant au moins un desdits senseurs (10), lesdits groupes (G) étant classés selon un ordre de classement allant d'un groupe le plus haut classé (G1) jusqu'à un groupe le plus mal classé (G3), ledit contrôleur d'affichage (70) sélectionnant un senseur du premier groupe jugé intègre en partant du groupe le plus haut classé (G1) selon ledit ordre de classement.

5. Système d'aide au pilotage selon la revendication 4,
**caractérisé en ce que** chaque groupe (G) distinct du groupe le plus mal classé (G3) comporte au moins deux senseurs (10).

6. Système d'aide au pilotage selon la revendication 5,
**caractérisé en ce que** ledit contrôleur d'affichage (70) est configuré pour considérer qu'un groupe (G) est intègre lorsque les au moins deux senseurs (10) de ce groupe déterminent des valeurs égales entre elles à une marge prédéterminée près pour ledit paramètre.

7. Système d'aide au pilotage selon l'une quelconque des revendications 4 à 6,
**caractérisé en ce qu'**au moins deux desdits groupes (G) comportent des senseurs dissimilaires.

8. Système d'aide au pilotage selon l'une quelconque des revendications 4 à 7,
**caractérisé en ce que** ledit ordre de classement est un ordre établi en fonction d'un niveau de précision des senseurs.

9. Système d'aide au pilotage selon l'une quelconque des revendications 1 à 8,
**caractérisé en ce que** ledit système d'aide au pilotage (1) comporte un système de pilotage automatique (40), le système de pilotage automatique (40) comportant au moins un actionneur (50) agissant sur un organe de pilotage (60), le système de pilotage automatique (40) comprenant un contrôleur de pilotage (45) communiquant avec le contrôleur d'affichage (70), le contrôleur de pilotage (45) étant configuré pour piloter ledit au moins un actionneur (50) en fonction de ladite valeur mesurée par ledit senseur sélectionné.

10. Véhicule (100),
**caractérisé en ce que** ledit véhicule (100) comporte un système d'aide au pilotage (1) selon l'une quelconque des revendications 1 à 9,

11. Procédé pour déterminer une valeur intègre d'un paramètre avec un système d'aide au pilotage (1), le système d'aide au pilotage (1) comprenant plusieurs afficheurs (30) et au moins un jeu de senseurs ayant une pluralité de senseurs (10) mesurant chacun une valeur d'un même paramètre, chaque afficheur (30) étant configuré pour afficher un symbole porteur de ladite valeur, ladite pluralité de senseurs (10) comprenant des senseurs redondés avec une redondance d'ordre trois ou plus,
**caractérisé en ce que** le procédé comporte la sélection (STP2), au moins dans un mode de fonctionnement automatique, avec un contrôleur d'affichage (70) selon une logique mémorisée d'un senseur sélectionné parmi ladite pluralité de senseurs (10), chaque afficheur (30) utilisant la valeur dudit paramètre mesuré avec ledit senseur sélectionné pour l'affichage (STP3) dudit symbole.

12. Procédé selon la revendication 11,
**caractérisé en ce que** le procédé comporte un calcul (STP21) avec le contrôleur d'affichage (70) d'une moyenne des valeurs mesurées par les senseurs de ladite pluralité de senseurs (10), ledit contrôleur d'affichage (70) sélectionnant ledit jeu sélectionné en fonction de ladite moyenne.

13. Procédé selon la revendication 11,
**caractérisé en ce que** le procédé comporte la détermination (STP22) avec le contrôleur d'affichage (70) du senseur sélectionné par application d'un algorithme de la médiane.

14. Procédé selon la revendication 11,
**caractérisé en ce que** ladite pluralité de senseurs (10) comporte un nombre de groupes (G) supérieur à un, chaque groupe (G) comprenant au moins un desdits senseurs, lesdits groupes (G) étant classés selon un ordre de classement allant d'un groupe le plus haut classé (G1) jusqu'à un groupe le plus mal classé (G3), ledit procédé comprenant la sélection (STP23) avec le contrôleur d'un senseur du premier groupe jugé intègre en partant du groupe le plus haut classé (G1) selon ledit ordre de classement.

15. Procédé selon la revendication 14,
**caractérisé en ce que** le procédé comporte le classement d'un groupe (G) en tant que groupe intègre lorsqu'au moins deux senseurs (10) de ce groupe (G) déterminent des valeurs égales entre elles à une marge prédéterminée près pour ledit paramètre.
